# EUROPEAN PATENT APPLICATION

(11) **EP 1 455 313 A1**
(43) Date of publication of application: **08.09.2004**
(21) Application number: 04251264.0
(22) Date of filing: 04.03.2004
(51) Int. Cl.: G07C 5/00

(54) **Aircraft condition analysis and management system**

(30) Priority: 04.03.2003 US 377881
(71) Applicant: Arinc Incorporated, Annapolis, MD 21401-7465 (US)
(72) Inventor: Kent, Renee, Annapolis, MD 21403 (US); Martolini, Antony, Edgewater, MD 21037 (US); Munns, Tom, Gambrills, MD 21054 (US); Sheppard, John, Pasadena, MD 21122 (US)
(74) Representative: Blatchford, William Michael

(57) **Abstract**

The invention provides a health management system and method for a complex system having at least one information source with data sources, an Aircraft Condition Analysis and Management system (ACAMS) for monitoring the data sources, an information controller for collecting and processing the data sources and a diagnostic/prognostic reasoner for fusing the collected data sources to establish current and future states and conditions of the complex system.

## Description

### BACKGROUND OF THE INVENTION

### 1. Field of Invention

This invention relates generally to real-time diagnostics and prognostics, and health management for complex systems for system decision support. More specifically, this invention relates to the systems and methods by which information about the state of a complex system is captured, analyzed and disseminated to locations/personnel so that decisions can be made regarding asset disposition and suitability for use, preventive and/or corrective action can be taken, further (off-line) analysis can be performed and decisions can be made regarding complex system maintenance needs, including supplies.

### 2. Description of Related Art

Within the context of this invention, the expression "complex system" is understood to mean a system having a plurality of components, such as electronic and mechanical or structural components that are interconnected. Complex systems of this type exist in a great variety of fields, such as, for example in the automotive, maritime and aviation industries.

To maintain and manage the health of a "complex system" in these industries, and as an exemplary embodiment, in an aircraft, one must take into consideration that an aircraft involves many electronic, mechanical, and structural components that must accurately and reliably function with each other in order to ensure a safe and reliable vehicle. The automated real-time health management of an aircraft is becoming increasingly important as the complexity and uniqueness of each system increases. As aircraft subsystems become more and more complex, an increasing need exists to provide technicians with maintenance assistance features. Accordingly, in response to this need, the airline industry has installed built-in-test/built-in-test equipment (BIT/BITE) for various onboard avionic systems. The BITE systems provide diagnostic information for malfunctions and related maintenance features of avionic systems and subsystems.

Avionic systems are comprised of numerous line replaceable units (LRU), each of which has replaceable electronics components. An LRU is a highly complex module often incorporating several data processors for controlling and/or monitoring one or more components of an aircraft. An LRU may be provided to control and/or monitor one or more devices, such as, for example, actuators, valves, motors, etc., associated with one or more particular component of an aircraft. An LRU typically also generates output signals which are monitored to determine if the component is not operating properly.

However, prior complex system health management systems and processes have the following features which limit their applicability to real-time (on-board) health management. For example, prior systems typically use only BIT/BITE systems and physical sensors for analysis, which limits the number of diagnostic information data sources. Limiting the number of diagnostic information data sources reduces the ability to correctly isolate a fault and to perform hierarchical analysis at the system-level.

Further, prior systems typically do not fuse information from secondary sources, such as flight data, with physical measurements to perform a health analysis. The use of secondary sources of information for health analysis allows the analysis to be correlated to phase of operation, i.e., the operational or flight regime, which allows a more rigorous health analysis and redundancy of data sources that allows fault tolerant health analysis (i.e., health analysis which is possible even in the presence of specific sensor malfunctions, missing sensor data, or system faults).

Still further, prior systems typically use either physical models or rule-based systems to establish a relationship between a sensor response and a fault characteristic. This limits the ability to perform an accurate health analysis in real-time because (a) physical models tend to be very complex and computationally intensive, (b) rule-based analysis tends to be limited by completeness and discreteness in the basic rule set and (c) it is difficult to incorporate realistic operational conditions and characteristics (such as system degradation over time) into either physical models or rule sets.

Additionally, prior systems may output a fault code or class of fault codes at the LRU-level rather than performing higher level reasoning to derive a health state at the system-level. By not performing the higher level reasoning, a health analysis does not account for LRU-to-LRU interactions, or component-to-components interactions, without significant post-processing and testing by maintenance personnel. In addition, this can result in false calls (e.g., erroneous identification or isolation of a fault), missed faults, or incorrect fault identification, i.e., erroneous diagnostic or prognostic results of any nature.

Prior diagnosis or prognosis systems do not provide real-time analysis during vehicle operation, which results in failure to provide immediate notification of suspect components that contribute to an indicated fault.

Still further, prior systems may perform only diagnosis, not prognosis (i.e., fault prediction).

Still further, prior systems may provide only a fault/no fault analysis. This means that prior health management systems do not provide a means to track degradation in health state over time. This limits the ability to provide prognostic or predictive analysis.

Still further, prior health management system architectures are tailored to a specific LRU or a specific subsystem (e.g., a vehicle propulsion subsystem). Such health management systems are not generally applicable to multiple types of complex systems (i.e., aircraft, spacecraft, ground vehicles).

While some health management systems address some of these points, applicants are not aware of a prior health management system that addresses all the points in a single system.

### SUMMARY OF THE INVENTION

Accordingly, one object of this invention is to provide single health diagnostic and prognostic management systems and methods for automated diagnosis and prognosis of complex systems.

Another object of this invention is to provide health management/maintenance systems and methods that address the need for health management for complex systems in order to improve safety, improve decision support for disposition of assets, improve maintenance processes through faster (real-time) diagnoses, prognoses and fault isolation and improve parts supply management through improved prediction of future fault events.

This invention separately provides a system and method that fuses multiple existing information sources to improve diagnosis of and prognosis of the condition of complete vehicle systems.

This invention separately provides a system and method that addresses diagnosis and prognosis at the system-level of a complex system so that interactions between individual complex system components are considered in the analysis.

This invention separately provides a system and method that considers line replaceable units-to-line replaceable units interactions and sub-system interactions.

This invention separately provides a system and method by which information from a complex system is captured, analyzed, diagnosed and a prognosis made in real-time, and disseminated to locations/personnel so that corrective action can be taken; further (e.g., off-line) analysis can be performed; and complex system supply, maintenance and disposition of system asset decisions can be made.

This invention separately provides systems and methods for notification of aircraft complex system fault behavior to a ground crew for corrective action.

This invention separately provides systems and methods for interfacing with flight crew or adaptive flight control systems for in-flight corrective action of aircraft complex systems.

This invention separately provides systems and methods for prediction of complex system fault behavior.

In various exemplary embodiments of the systems and methods according to this invention, an Aircraft Condition Analysis and Management System (ACAMS) can be integrated as a on-board complex system health analysis system on a vehicle.

In a further various exemplary embodiments of the systems and methods according to this invention, an Aircraft Condition Analysis and Management System (ACAMS) can be datalinked with ground crew as a off-board health analysis system for an aircraft.

In various exemplary embodiments of the systems and methods according to this invention, an Aircraft Condition Analysis and Management System (ACAMS) module can be configured as a stand-alone avionics unit aboard an aircraft.

In a further various exemplary embodiments of the systems and methods according to this invention, Aircraft Condition Analysis and Management System (ACAMS) modules can be integrated into existing avionics units.

This invention separately provides systems and methods for prediction of asset readiness based on predicted system capability.

This invention separately provides systems and methods that provide diagnostic or prognostic analysis in integrated onboard/offboard, onboard, or offboard configurations.

These and other features and advantages of this invention are described in, or are apparent from, the following detailed description of various exemplary embodiments of the systems and methods according to this invention.

### BRIEF DESCRIPTION OF THE DRAWINGS

Various exemplary embodiments of the system and apparatus according to this invention will be described in detail, with reference to the following figures, wherein:

Figure 1 is a schematic representation of a system of one exemplary embodiment of a health management system according to this invention;

Figure 2 is a schematic representation of a system of another exemplary embodiment of a health management system according to this invention;

Figure 3 is a schematic representation of the functions performed by exemplary embodiments of systems and methods of the invention;

Figure 4 is a schematic outline of one exemplary embodiment of a system architecture according to the invention;

Figure 5 shows one exemplary embodiment of an information framework for a system according to the invention;

Figure 6 shows one exemplary embodiment of an diagnostic/prognostic reasoner; and

Figure 7 illustrates one exemplary embodiment of an on-board health diagnostic, prognostic, and health management system according to the invention.

### DETAILED DESCRIPTION OF EXEMPLARY EMBODIMENTS

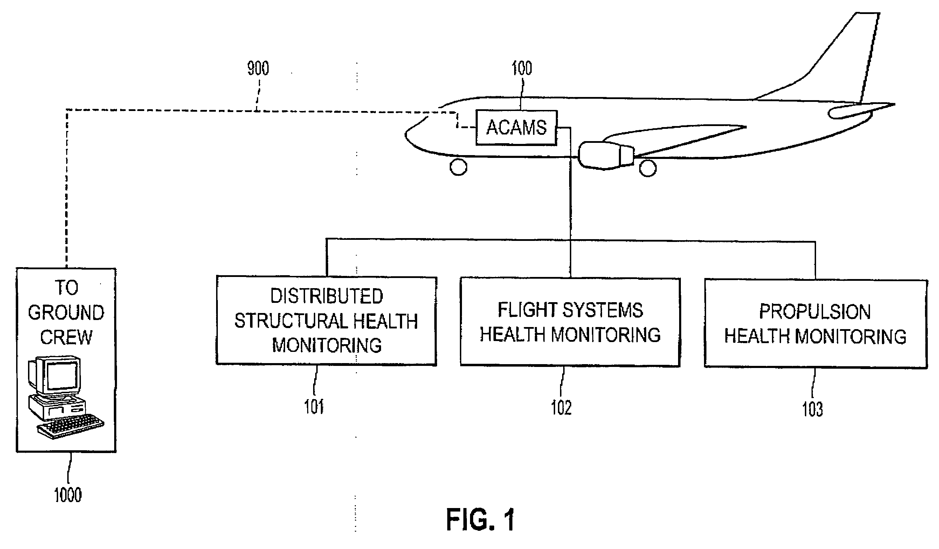

Fig. 1 illustrates a system of one exemplary embodiment according to this invention. The health management system 10 includes an Aircraft Condition Analysis and Management System (ACAMS) 100 that includes, for example, an aircraft distributed structural health monitor 101, flight systems health monitor 102 and propulsion health monitor 103. The distributed structural health monitor 101 relates to the structure of the aircraft which monitors various system parameters, for example, but not limited to, vibration, pressure, temperature, strain and moisture content of the vehicle structure. The flight system health monitor 102 monitors flight data and performance data of the aircraft including, for example, but not limited to, airspeed, ground speed, wheel speed, attitude, heading and Global Positioning System (GPS) parameters. The propulsion health monitor 103 relates to the function and performance of the propulsion system of the aircraft.

The ACAMS system 100 monitors the various subsystems, identifies or predicts faults in the subsystem, and sends data to an on-board datalink. The ACAMS system 100 then sends a message, that identifies the suspect component(s), to a maintenance, dispatch terminal or decision-making authority.

The ACAMS system 100 uses sensor fusion from various subsystems so that advanced diagnostics and prognostics for fault isolation and prediction can be achieved.

It should be appreciated that in various exemplary embodiments that the ACAMS system can be operated in an integrated off-board mode 900, in which case, the off-board mode 900, hosted to a ground terminal 1000 analyzes the data to improve safety, improve maintenance process through higher fidelity diagnoses and fault isolation and improve prediction of future fault events.

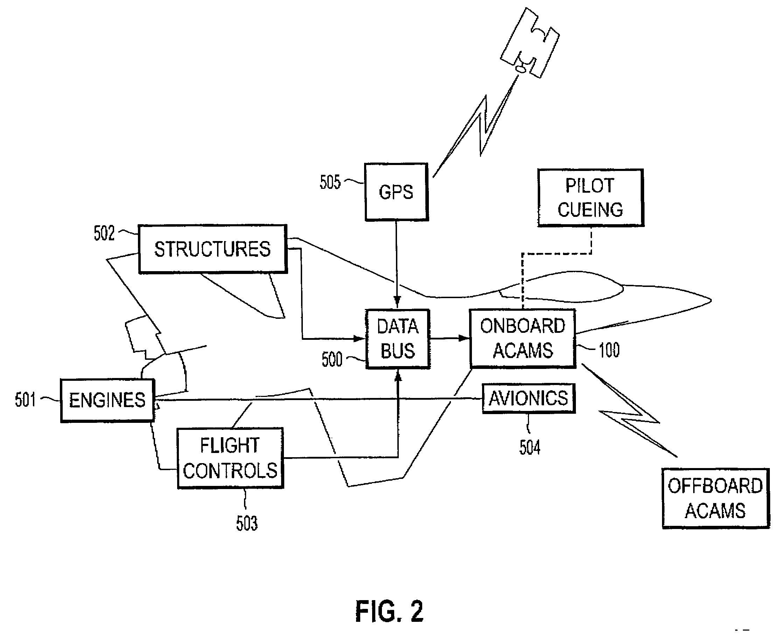

Fig. 2 illustrates a system of another exemplary embodiment according to this invention. For example, the ACAMS system may be applicable to the Department of Defense (DOD) to integrate advanced technology to improve asset readiness, future mission planning based on actual system capability and performance, mission execution for the pilot, and maintenance processes maintainer and logistician for legacy and new systems.

As shown in Fig. 2, the on-board ACAMS system 100 accepts data from a on-board data bus 500, such as, but not limited to, an MIL STD 1553 data bus, for real-time analysis. The data bus 500 receives signals from, for example, but not limited to, an engine 501, structure 502 of the aircraft, flight controls 503 of the aircraft, avionics controls 504, and Global Positioning System (GPS) 505. The ACAMS system 100 then uses information fusion and onboard reasoning processes for diagnosis, prognosis, fault isolation, and identification of component or components responsible for faulty conditions to cue operators and/or maintenance personnel to ensure that parts are available for repair or replacement, appropriate maintenance is performed, and assets are deployed in time for the next mission. In this embodiment, the ACAMS prognosis information can also, or alternatively, be configured to provide a description of asset readiness for upcoming mission scenarios to be provided to decision-making authorities for adaptive asset deployment and mission planning.

It should be appreciated that in various exemplary embodiments that the ACAMS system can be operated in an integrated off-board mode, in which case, the off-board mode can deploy plans to a decision-making authority or maintenance organization to improve flight scheduling, targets, deployment scheduling and criticality of failure, especially relative to upcoming missions.

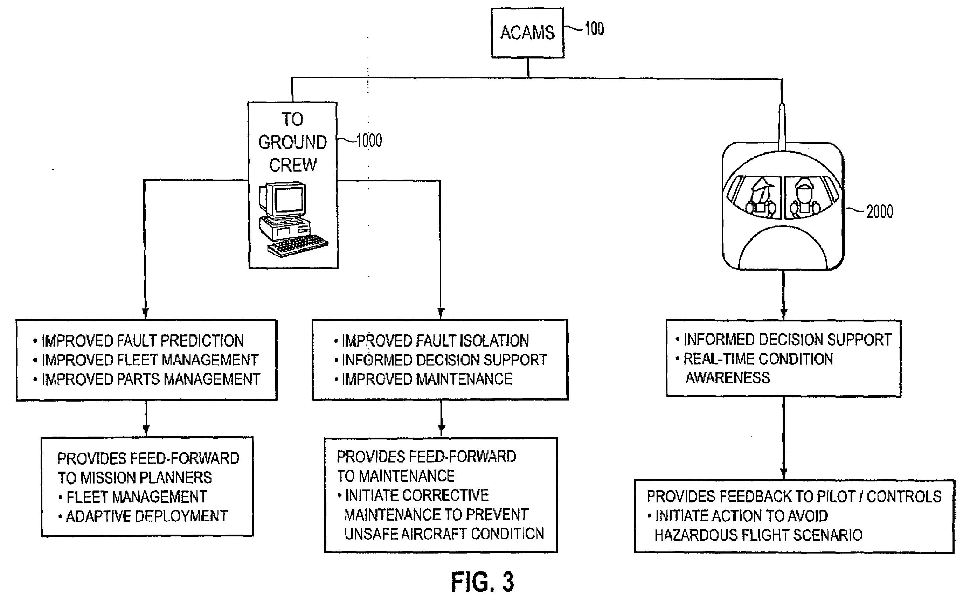

Fig. 3 illustrates the benefits of improving aviation safety according to an exemplary embodiment of the invention. As shown in Fig. 3, the health management system 10 can be linked on-board 1000 in the aircraft or datalinked off-board 2000 to a ground crew.

In the on-board mode 1000, the benefits obtained are, for example, informed decision support and real-time condition awareness. By having these functions, the health management system 10 provides feedback and control to the pilot which allows the pilot to initiate any action to avoid hazardous flight scenario.

In the off-board mode 2000, the benefits obtained are, for example, improved fault isolation, informed decision support and improved maintenance. By having these functions, the health management system 10 provides feed-forward to ground maintenance which allows maintenance organization to initiate corrective maintenance to prevent unsafe aircraft condition. As an alternative, the off-board mode 2000 is designed for legacy or new aircraft to improve asset readiness, improve fault prediction, improve fleet management and improve parts management. By having these functions, the health management system 10 provides feed-forward to mission planners for fleet management and adaptive deployment.

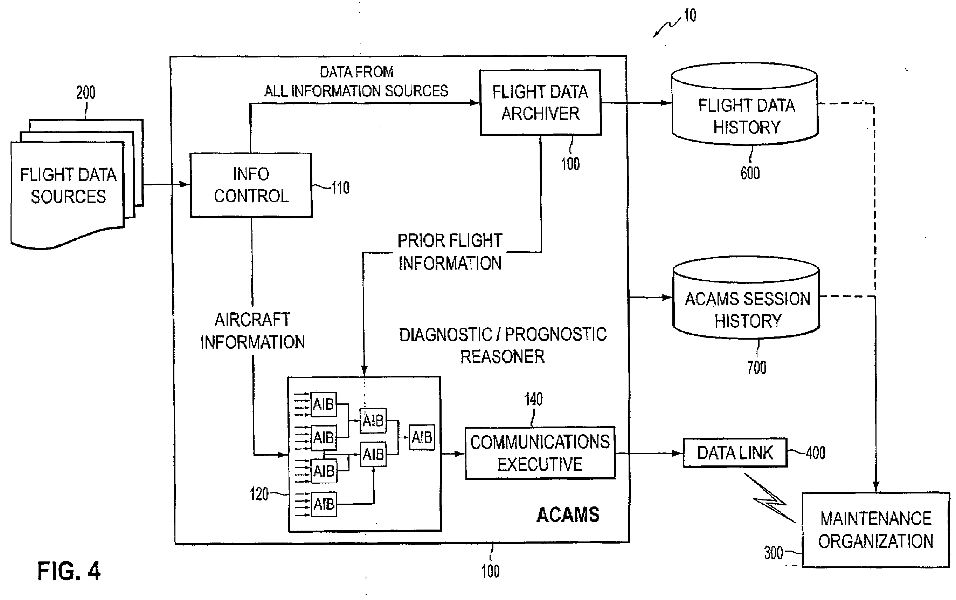

Fig. 4 illustrates a flowchart of the system according to an exemplary embodiment of the invention. For example, Fig. 4 shows the detailed system of a health management system 10 that uses both diagnostic and prognostic reasoning for the same module.

As shown in Fig. 4, the health management system includes multiple information source 200 having data sources, an Aircraft Condition Analysis and Management system (ACAMS) 100 for monitoring the data sources, an information control 110 for collecting and processing the data sources and a diagnostic/prognostic reasoner 120 for fusing, analyzing and interpreting the collected data sources to establish a state and condition of a vehicle.

The ACAMS system collects data from multiple fight data sources 200, including but not limited to, physical sensors, flight profile information, flight data recorder data, and secondary indications of system behavior. The data is collected and archived in raw form by the Information Control module 110 in the ACAMS system. This information is sent to the diagnostic/prognostic reasoner 120, which fuses the collected (primary and secondary) information to establish the aircraft state and condition (health) of the aircraft. The analysis is further refined with information from the flight data archiver 130 that stores prior flight history, if available. The ACAMS reasoner 120 also analyzes the causal factor(s) that contribute to any faults that may be indicated. The ACAMS reasoner 120 contains internal algorithms that relate tests derived from sensor responses and other information sources to fault conditions within the system of interest. The health analysis algorithms are derived from a hybrid of machine learning (i.e., vehicle response as a function of phase of operation and typical vehicle behaviors), physical models (i.e., physics-based analysis of sensor responses in the presence of degradation and fault conditions), human expertise and expected and learned vehicle behaviors.

The aircraft state and condition results are archived and the analysis of aircraft condition is updated as information continues to be collected. The analyzed information indicating health state, faults in the vehicle, causal factors and their effects are sent to a communications executive 140 on the vehicle and, in the case of aircraft, the information is connected by a datalink 400 to the maintenance organization or decision-making authority 300 (ground). Further, the maintenance organization 300 can receive additional information, such as flight data history 600 and ACAMS session history 700 that was analyzed from the ACAMS system 100. It should also be appreciated that in various exemplary embodiments that the health state, faults, and causal factors can be downloaded to the decision-making authority or maintenance organization 300.

It should also be appreciated that in various exemplary embodiments that the ACAMS system can be operated in an integrated on-board/off-board mode, in which case, the on-board analysis is described above and an off-board version of ACAMS software (hosted on a ground terminal) analyzes the data as above, but also includes, for example, but not limited to, off-board type maintenance history information.

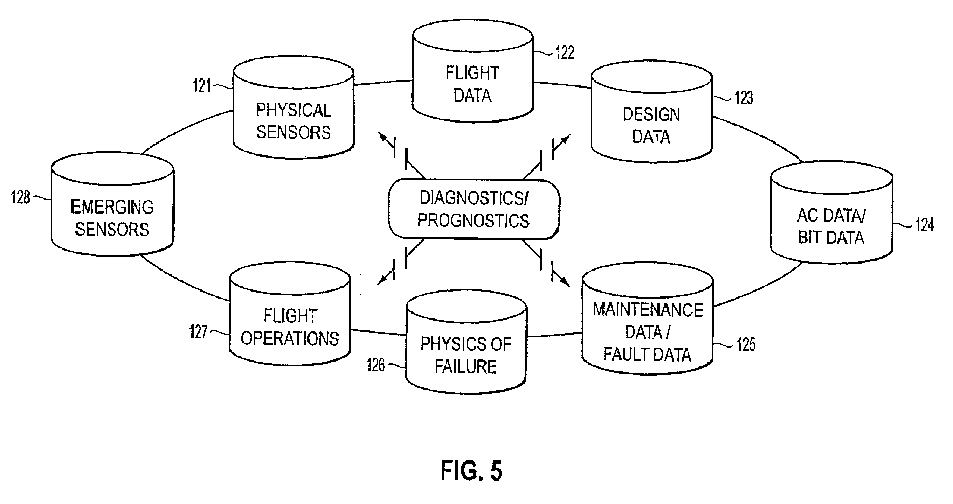

Fig. 5 illustrates in greater detail an information framework for the system according to an exemplary embodiment of the invention. In particular, Fig. 5 shows the ACAMS framework of the diagnostic/prognostic reasoner 120 which uses a wide variety of data sources and data types to support the advanced diagnostics and prognostics for each subsystem. For example, the information from multiple types of sensors and information sources are used in the formulation of the models that will be used for diagnostic and prognostic analysis. The information sources that are used for formulating the models include, for example, but not limited to, data from physical sensors 121 to describe the aircraft system physical behavior; flight data 122 to describe actual aircraft behavior under operational conditions; design data 123 to describe the physical interactions within the aircraft system; aircraft data and built-in-test data 124 to describe results of tests from independent LRUs[; the maintenance and fault data 125 to describe the fault interactions and interconnectivity within the vehicle system or subsystem; physics of failure 126 to describe the physical processes associated with fault degradation, accumulation, evolution, and interaction in and between particular components and systems; flight operations 127 to describe the operations of the aircraft; and emerging sensors 128 to include new physical sensors including, but not limited to, micro-electromechanical systems, fiber optics, ultrasonic sensors, and acoustic emission sensors, for characterization of component and system-level degradation, especially in structural materials.

It should be appreciated that maintenance history and maintenance information may also be used to modulate the response of the models. During operation, the sensor data and flight data (such as aircraft data, flight data recorder data, flight operations [flight profiles], and fault indicators, such as BIT/BITE) are collected by the ACAMS system and used as near real-time input to these models which is derived for diagnosis and prognosis analysis. If available, previous health data, maintenance history, and maintenance information are also collected for incorporation into the diagnostic and prognostic analysis. These data are then used to establish aircraft state and phase-of-flight so that the diagnostic/prognostic reasoning is performed by operating the derived models on the real-time input data. It should be appreciated that the data/information sources shown in Fig. 5 is not a complete list of all data sources used.

It should also be appreciated that in information various exemplary embodiments that a similar ACAMS analysis can be performed off-board the vehicle, where more computational power may be available.

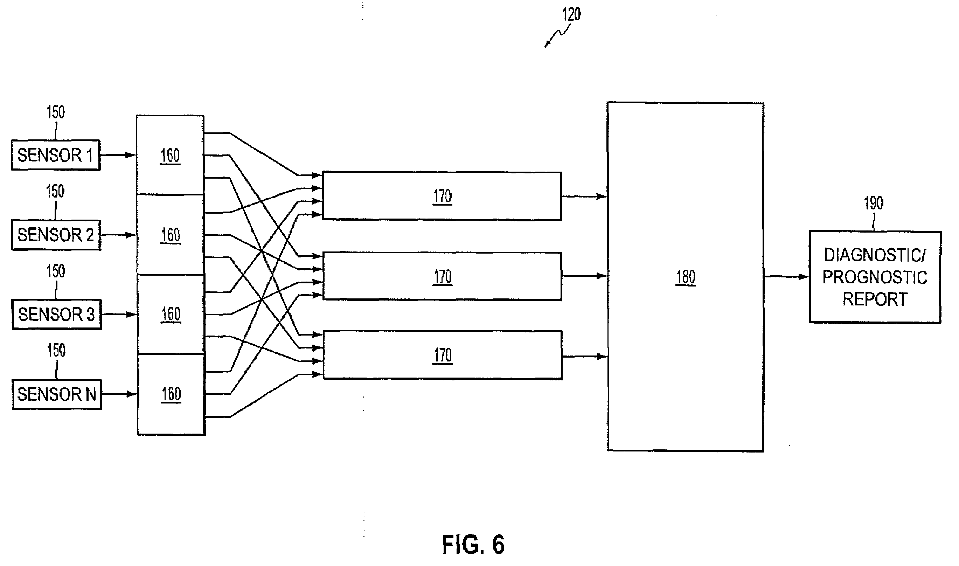

Fig. 6 illustrates in greater detail a diagnostic/prognostic reasoner for the system according to an exemplary embodiment of the invention. In particular, Fig. 6 shows the diagnostic/prognostic reasoner 120 in greater details of the overall reasoning process for diagnosis and prognosis of the system.

As shown in Fig. 6, the diagnostic/prognostic reasoner 120 includes N-sensors 150, N-feature classifiers 160, M-knowledge bases 170, inference processor 180, which are used to produce a diagnostic/prognosis report 190.

The sensors 150 can generate current and/or predicted responses from primary and secondary information sources. Any number (N) of the specific current or predicted sensor responses from the available primary and secondary information sources can be classified in N number of feature classifiers 160. The classified features 160 may be fused using any number (M) of knowledge bases 170, each of which contains specific represented knowledge of system behavior. The represented knowledge bases 170 are captured from sources including, but not limited to, physics of failure models, learned vehicle behavior, expert knowledge, and design data of the system. The outputs from the knowledge bases 170 are processed in the inference processor 180 by using inferencing techniques that translate results from an information-domain to a physical domain, for diagnostic or prognostic output of the system in a diagnostic/prognosis report 190.

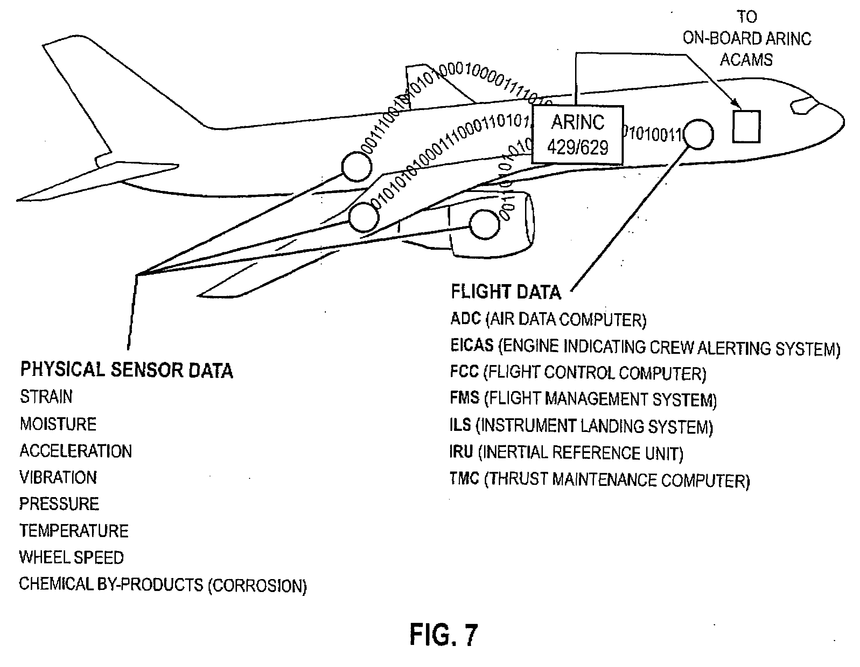

Figure 7 illustrates the on-board system according to an exemplary embodiment of the invention. As shown in Fig. 7, the ACAMS system accepts data from multiple information sources, including, but not limited to, physical sensor data (e.g., strain, moisture, acceleration, vibration, pressure, temperature, wheel speed and chemical by-products), flight data (e.g., Air Data Computer (ADC), Engine Indicating Crew Alerting System (EICAS), Flight Control Computer (FCC), Flight Management System (FMS), Instrument Landing System (ILS), Inertial Reference Unit IRU) and Thrust Maintenance Computer (TMC)) and/or BIT/BITE fault data, if available (not shown). The ACAMS system receives the data through a direct feed or via the on-board data bus, for example, but not limited to, ARINC-429, ARINC-629, IEEE-1553. The ACAMS system contains internal algorithms that relate tests derived from sensor responses and other information sources to fault conditions within the system of interest. Internal to the ACAMS system, flight data is used to derive phase of operation information and the data sources are categorized and fed to the appropriate test/fault relationships for the given phase of operation. The phase of operation is also used within specific analysis blocks to refute or corroborate specific sensor responses, as appropriate. This derived information is used, in turn, to feed further health analysis. All combinations of test/fault relationships in the model are examined in response to a measured test result from a given sensor response. A hierarchical analysis of the fault indications and test/fault relationships continue to establish which components within the system are the likely candidate causes of the fault indications and possible effects of the faults on system performance under specified conditions. This list of likely candidate causes is categorized according to which components must be repaired immediately. For example, for commercial aircraft, the candidate list is categorized in accordance with FAA guidelines of the minimum equipment list necessary to operate and dispatch aircraft; for military aircraft, the candidate list is categorized in accordance with equipment required to complete specific mission requirements. When a fault condition requiring immediate action (as defined by such user or regulatory authority guidelines) is indicated, the health management system sends message to the on-board datalink and a message that identifies the suspect component(s) is sent to a maintenance or dispatch terminal, or decision-making authority.

While this invention has been described in conjunction with the exemplary embodiments outlined above, it is evident that many alternatives, modifications and variations will be apparent to those skilled in the art. Furthermore, although the exemplary embodiments are described for use in a variety of aircraft, it is contemplated that this invention may be used with other methods of transportations through the land and the sea. Accordingly, the exemplary embodiments of the invention, as set forth above, are intended to be illustrative, not limiting. Various changes may be made to the invention without departing from the spirit and scope thereof.

## Claims

1. A health management system for complex systems, comprising:
at least one information source having data sources;
an Aircraft Condition Analysis and Management system (ACAMS) for monitoring the data sources;
an information controller for collecting and processing the data sources; and
a diagnostic/prognostic reasoner for fusing and analyzing the collected data sources to establish current and future states and conditions of the complex systems.

2. The system according to claim 1, wherein the at least one information source further comprises a flight data, a system performance data and a physical sensor data.

3. The system according to claim 2, wherein the at least one information source further comprises a built-in-test/built-in-test equipment (BIT/BITE) data.

4. The system according to claim 2, wherein the flight data is selected from a group comprising of airspeed, ground speed, attitude, heading or Global Position System (GPS).

5. The system according to claim 2, wherein the physical sensor data is selected from a group comprising of strain, moisture, acceleration, vibration, pressure, temperature, wheel speed or chemical by-products.

6. The system according to claim 1, wherein the ACAMS system accepts data through a data bus.

7. The system according to claim 1, wherein the ACAMS system performs analysis at a system level to identify fault conditions.

8. The system according to claim 1, wherein the ACAMS system performs real-time condition awareness.

9. The system according to claim 1, wherein the diagnostic/prognostic reasoner comprises internal algorithms derived from the information sources to indicate fault conditions.

10. The system according to claim 9, wherein the internal algorithms are selected from a group comprising of machine learning, physical models, prior vehicle history, human expertise or expected behavior.

11. The system according to claim 1, wherein the ACAMS system is datalinked on-board the vehicle.

12. The system according to claim 1, wherein the ACAMS system is datalinked off-board the vehicle so that more computational power is available.

13. The system according to claim 1, wherein the ACAMS system is configured as a stand-alone avionics unit.

14. The system according to claim 1, wherein the complex system is a vehicle.

15. A method for receiving data in real-time to diagnosis and prognosis components from a complex system, comprising:
receiving the data from multiple information sources;
monitoring the data through an Aircraft Condition Analysis and Management system (ACAMS); and
analyzing the data through a diagnostic/prognostic reasoner to establish current and future states and conditions of the complex system.

16. The method according to claim 15, wherein the information sources are derived from flight data, system performance data, physical sensor data and built-in-test/built-in-test equipment (BIT/BITE) data.

17. The method according to claim 15, further comprising:
receiving and collecting the data from a data bus, the data bus sends the collected data to the ACAMS system to be analyzed.

18. The method according to claim 15, further comprising:
analyzing at a system level to identify fault components in the complex system.

19. The method according to claim 15, further comprising:
linking the data on-board the complex system to achieve real-time awareness and informed decision support.

20. The method according to claim 15, further comprising:
linking the data off-board the complex system to compute diagnoses and prognoses with more computational power.

21. A vehicle condition monitoring system for monitoring systems of a vehicle, comprising:
at least one information source having a plurality of data sources, condition analysis means coupled to the data sources for monitoring the data sources, an information controller for collecting and processing data from the data sources, and diagnostic and/or prognostic processing means for receiving the said data and generating output signals indicative of current and future conditions of systems of the vehicle.
